# EUROPEAN PATENT SPECIFICATION

(11) **EP 1 998 090 B1**
(45) Date of publication and mention of the grant of the patent: **29.07.2015**
(21) Application number: 08156251.4
(22) Date of filing: 15.05.2008
(51) Int. Cl.: F16J 15/32, B62D 33/073

(54) **Seal, vehicle cab and chassis provided with such a seal, and the use of such a seal**
Dichtung, Fahrerhaus und Fahrgestell mit einer derartigen Dichtung sowie Verwendung einer derartigen Dichtung
Sceau, cabine de véhicule et châssis fournis d'un tel sceau et l'utilisation d'un tel sceau

(30) Priority: 25.05.2007 SE 0701267
(43) Date of publication of application: 03.12.2008
(73) Proprietor: Scania CV AB (publ), 151 87 Södertälje (SE)
(72) Inventor: Kurman, Klas, 141 42 Huddinge (SE)
(74) Representative: Scania CV AB

(56) References cited:
- WO-A2-2005/091994
- DE-A1- 3 405 921
- JP-A- 11 167 426
- JP-U- 55 085 521
- US-A- 4 781 388
- US-A- 5 916 660

## Description

### TECHNICAL FIELD

The present invention relates to a sealing arrangement comprising a vehicle chassis, a vehicle cab and a seal.

The invention relates also to using such a seal.

### BACKGROUND

Increasing worldwide environmental awareness has resulted in more stringent truck emission requirements not only from authorities in many countries but also from truck users and society at large. Ways of meeting the emission requirements include reducing nitrogen oxide (NOₓ) contents, e.g. by improved EGR (exhaust gas recirculation), which lowers the combustion temperature and thereby reduces the formation of NOₓ, and improved turbocharging. At the same time, truck users want higher engine power to enable them to carry heavier loads and keep up with increasing traffic speeds. Both reducing emissions and increasing the engine power entail increasing requirements for more effective cooling of the engine and of EGR and turbocharging air.

A majority of today's trucks have the engine situated in the chassis under the cab, and the cab has typically an arched underside serving as the upper delineating surface of the engine compartment. Below the engine, which is fastened to the chassis, there are often cowlings intended inter alia to reduce the noise from the engine. The truck cab is connected to the chassis via a multitude of devices intended inter alia to provide good riding comfort, e.g. by springing, shock absorption, anti-roll stabilisation and vibration damping. The truck cab and hence also the upper delineating surface of the engine compartment are thus fastened movably to the chassis. The forward side of the engine compartment is usually delineated by the various cooling elements of the vehicle, and the engine compartment is substantially open rearwards to make it possible for air to flow through the radiator, through the engine compartment past the engine and out from the vehicle via the rear aperture of the engine compartment. Between the various cooling elements of the vehicle, which are fastened to the chassis, and the cab, which is fastened movably relative to the cooling elements, there is an air gap to prevent chafing and mutual impacts when the vehicle in motion shifts relative to the cooling elements. Typical cab movements relative to the chassis are quite small sideways, slightly larger in the travelling direction of the vehicle and quite large vertically.

In large parts of the world there are rules limiting the length of the vehicles which may be driven on public roads. At the same time there is a desire among truck users to be able to carry as large loads as possible; thus truck manufacturers have cause to make the truck cab and the engine compartment situated under it as short as possible so that the load platform or cargo space can be made as long as possible. This means that space in the engine compartment is limited and more specifically that the distance between the engine and the radiator situated at the front of the chassis and constituting the front wall of the engine compartment is limited. The distance between the engine and the sidewalls of the engine compartment is likewise limited. These narrow spaces result in substantial flow resistance to the incoming air passing through the radiator and through the engine compartment. This flow resistance leads to a considerable proportion of the air which enters the engine compartment through the radiator leaking out to the front or sides of or above the radiator via the gaps between the cab and the chassis/radiator. The fact that this air, having passed through the radiator, is warmer than air at normal outside temperature is a problem in that part of it is sucked back in through the radiator and thereby raises the temperature of the radiator air, with consequent impairment of cooling. This problem has long been well known and has been partly solved by sheetlike rubber seals between the radiator and the cab.

There are various problems, however, with using rubber seals for this purpose. The large vertical movement of the cab gives rise to a large movement along the direction of the extent of the seal on the sides of the radiator, which movement is likely to tear apart the seals along the sides of the radiator, since the seals are not flexible in this direction. In addition, the surface of the cab which faces the engine compartment often has a complicated shape with structures pressed in the sheetmetal and with various items mounted on the surface. This leads to the need for a plurality of rubber components for effecting reasonable sealing of the gaps, and hence to increased costs not only for material and stockholding but also for assembly work. Moreover, on many truck models the cab is tiltable forwards to allow access to the engine for servicing and maintenance; this further complicates the seal problem, since the tilt movement needs good clearance between cab and radiator. Additional seals are known from JP 55 085521 U which discloses a seal between a radiator mounted on a vehicle chassis and a cab, and US 4 781 388 which discloses a brush seal particularly applicable to components of turbo machines especially gas turbine engines, and specifically to heat exchangers for sealing the space between casing or housing elements which can undergo relative movement due to differential thermal effects. There is no prior art solution to the problem of achieving an effective and inexpensive seal which does not risk being torn apart by the large cab movements.

### SUMMARY OF THE INVENTION

An object of the invention is to provide a simple, inexpensive, durable and effective seal of a gap between a vehicle chassis and a vehicle cab. This is achieved by the features indicated in the claims set out below.

According to the invention, the seal takes the form of a brush and the bristles of the brush are cut to shape in such a way that their length varies along the extent of the brush. A brush is a surprisingly simple way of bridging, with good sealing effect, the varying gaps which occur between the chassis and the vehicle cab. The fact that the bristles of the bush are cut to shape making it easy for the brush to be so shaped as to seal against complicated structures and against components mounted on the opposite surface. In this description, "brush" means a device with a body to which a plurality of elongate, narrow, springy and flexible bristles are fastened. Paint brushes, brooms, mats with fringes and furs are examples of commonly used brushes which fall within this definition. A brush may also be configured in other ways and still be covered by the attached claims. In this context, brush also means, for example, a device to which a plurality of elongate rubber tabs are fastened at their short end, or else a rubber strip which is "fringed" on one long side.

According to a version of the invention, the brush may be so configured that its body is adapted to being connected to a radiator on the vehicle chassis, in which case the body of the brush may comprise a small number of rectilinear brush elements extending along the usual rectangular shape of the radiator.

The body may nevertheless also be adapted to being connected to the vehicle cab.

The brush may have a greater width than the width of a gap between the vehicle chassis and the vehicle cab, making it possible for the seal to maintain its function even during relative movement between the vehicle chassis and the vehicle cab.

The brush may further be provided with a fin, which may comprise a thin layer of a flexible material, e.g. plastic, fastened in the body and running in the same direction as the bristles. The fin helps to render the brush denser, while at the same time the bristles help to give the fin firmness and cause it to protrude at a suitable angle from the body.

In an embodiment, the bristles of the brush are made of plastic, such as polyethylene terephthalate, polybutene terephthalate or polyamide. The body of the brush may be made of, for example, metal, plastic, rubber or other suitable material.

The bristles of the brush may further have their one end fastened in a first body and their other end in a second body, the first body being adapted to being connected to the chassis and the second to the cab. In this case the bristles thus have no free ends but have both ends fastened in the respective bodies. The two bodies are adapted to being fastened with their backs towards the chassis/radiator and the cab respectively. In this case, the bristles may need to be longer than the distance between the chassis and the cab. It is also conceivable for the bristles of the brush to be elastic.

However, the bristles of the brush may also have their one end fastened in a first body and their other end freely accommodated in a slit in a second body, making it easy for the seal to maintain its function during limited movements between the chassis and the cab.

In another embodiment, the brush is provided with the bristles which run at a different angle relative to the other bristles of the brush, making it possible, for example, to seal a gap which is longer than the body of the brush.

The invention is not limited to a single brush. Combinations of seals in the form of brushes, e.g. a plurality of brushes arranged relative to the radiator, the cab, the cooler and the radiator, side by side, in parallel, overlapping or on opposite sides, are comprised within the concept of the invention.

The invention thus provides a seal between a chassis and a cab which is simple, easy to manufacture and fit, inexpensive and durable. The seal allows better cooling of, inter alia, charge air, EGR and engine, making possible not only lower emissions but also higher power output. A further advantage is that the radiator fan can be allowed to rotate more slowly while maintaining the same cooling effect, thus leading to lower noise levels.

Other features and advantages of the invention may be indicated by the claims and the description of embodiment examples set out below.

### BRIEF DESCRIPTION OF THE DRAWINGS

FIG. 1A is a schematic view, as seen from in front, of part of a truck chassis, part of a cab and a radiator situated between them.
FIG. 1B is a schematic view, as seen from in front, of part of a truck chassis, part of a cab and a radiator situated between them, in which one of the gaps between the cab and the radiator is provided with a seal according to the invention.
FIG. 2 is a schematic sideview in section of an engine compartment of a truck.
FIG. 3A is a schematic illustration of a brush.
FIG. 3B is a schematic illustration of a brush with a plurality of sets of bristles which run in different directions.
FIG. 3C is a schematic illustration of a brush cut to shape.
FIG. 4A is a schematic sectional view of a brush with a fin.
FIG. 4B is a schematic sectional view of a mounting strip intended for mounting a brush on a surface.

### DETAILED DESCRIPTION OF EMBODIMENT EXAMPLES

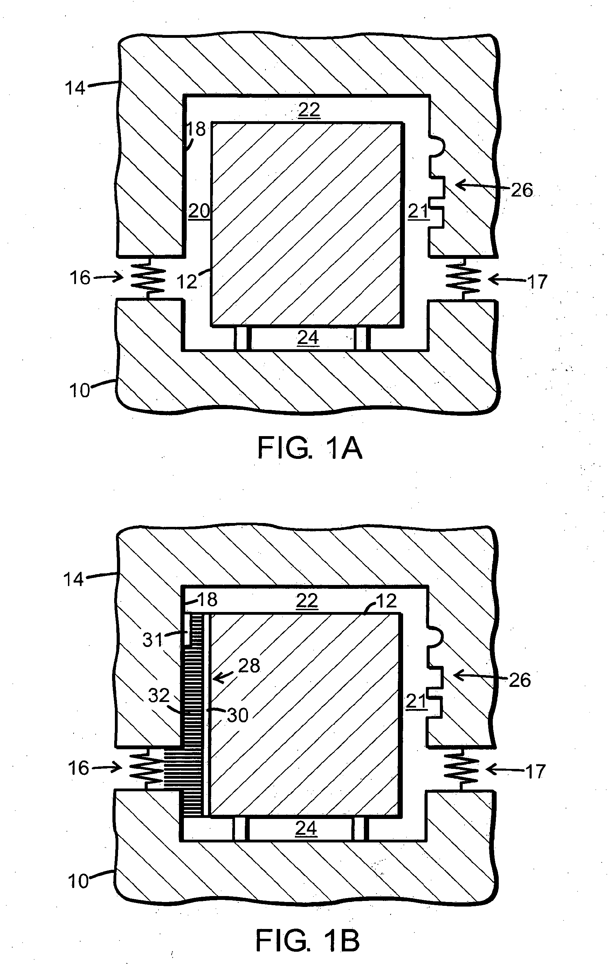

FIG. 1A is a schematic view of the devices situated behind the front hatch of a modem truck. A radiator 12 is installed on a truck chassis 10. A cab 14 is also connected to the chassis 10 via springs 16, 17, and the underside 18 of the cab serves as a delineating surface for the engine compartment. Between the radiator and the cab there are side gaps 20, 21 and an upper gap 22, to enable the cab to move relative to the chassis and the radiator. The cab can move relative to the chassis in any direction. Below the radiator there is also a lower gap 24; sealing this gap is no problem, since the radiator is not fastened movably to the chassis. The underside 18 of the cab may have a complicated shape, here depicted in the form of recesses and protrusions 26.

FIG. 1B is a schematic view of the same device as in FIG. 1A, but the side gap 20 (FIG. 1A) is sealed by a seal 28 according to the invention. The seal 28 comprises a brush with its body 30 connected to the radiator 12 in such a way that the bristles 32 of the brush abut against the underside 18 of the cab (FIG. 1A) and seal the side gap 20 (FIG. 1A). The bristles 32 of the brush are cut to shape in order also to seal in the space adjacent to the spring 16. A brush may similarly be cut to shape to seal against the recesses and protrusions 26.

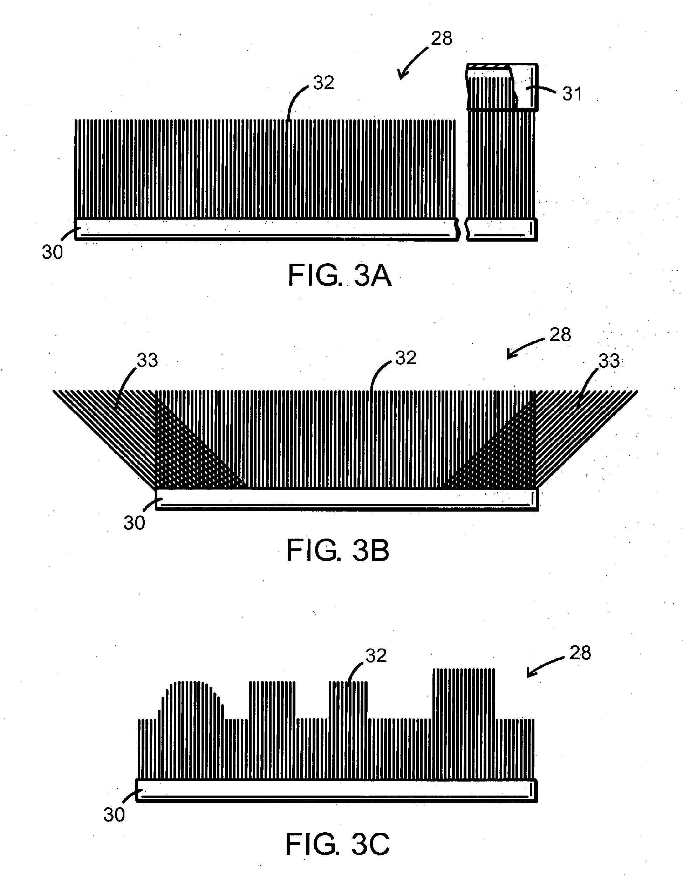

As further indicated at the upper portion of the brush 28 in FIG. 1B, the bristles of the brush may also be fastened to mutually opposite bodies 30, 31, one of them connected to the radiator 12 and the other to the cab 14. In this case, the length of the bristles may be such as to allow movements between the radiator 12 and the cab 14. They may for example, in an undepicted manner, be bent or provided with folds between the radiator and the cab. In that case, however, the bristles need not necessarily be fastened to both of the bodies 30, 31, as free ends of the bristles may, in the manner indicated in the cutaway portion of FIG. 3A, be freely accommodated in a slit in one of the mutually opposite bodies 30, 31, which slit is of such a depth that the bristles of the brush here again maintain their sealing function during movements between the radiator 12 and the cab 14.

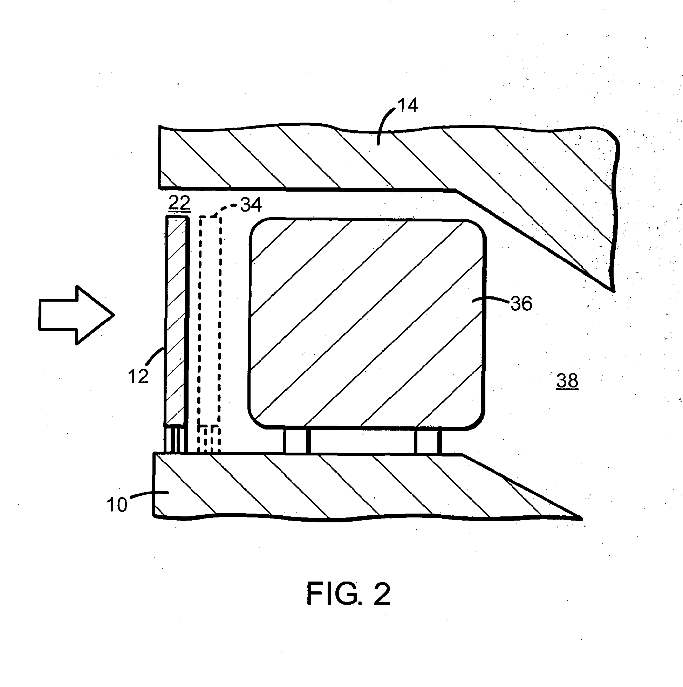

FIG. 2 is a schematic sideview in section of the engine compartment of a truck. The engine compartment is delineated substantially by the chassis 10, the radiator 12 and the cab 14. A further cooling element 34 may be installed on the chassis. An engine 36 is situated behind the cooling elements 12, 34 which are so arranged as to enable an air flow from in front to pass through them, past the engine and out through the rear aperture 38 of the engine compartment. If there is great flow resistance in this passage, part of the air will leak out through the gaps 20, 21 (FIG. 1A), 22 and raise the temperature of the air in front of the radiator; this leakage may accordingly be limited by seals, e.g. 28 (FIG. 1B) according to the invention.

FIG. 3A illustrates schematically an example of an embodiment of a seal 28 in the form of a brush which comprises a body 30 and bristles 32 fastened to the body.

FIG. 3B depicts a similar seal in which the brush also has bristles 33 running at different angles from the bristles 32 relative to the body 30. In this specific example, the angles and the locations of the bristles are so arranged that three examples of this embodiment which are associated with the radiator 12 and the sealing gaps 20, 21, 22, cover these gaps better than three examples of the embodiment illustrated in FIG. 3A.

FIG. 3C illustrates schematically an example of an embodiment in which the bristles 32 of the brush are cut to shape to seal against the recesses and protrusions 26.

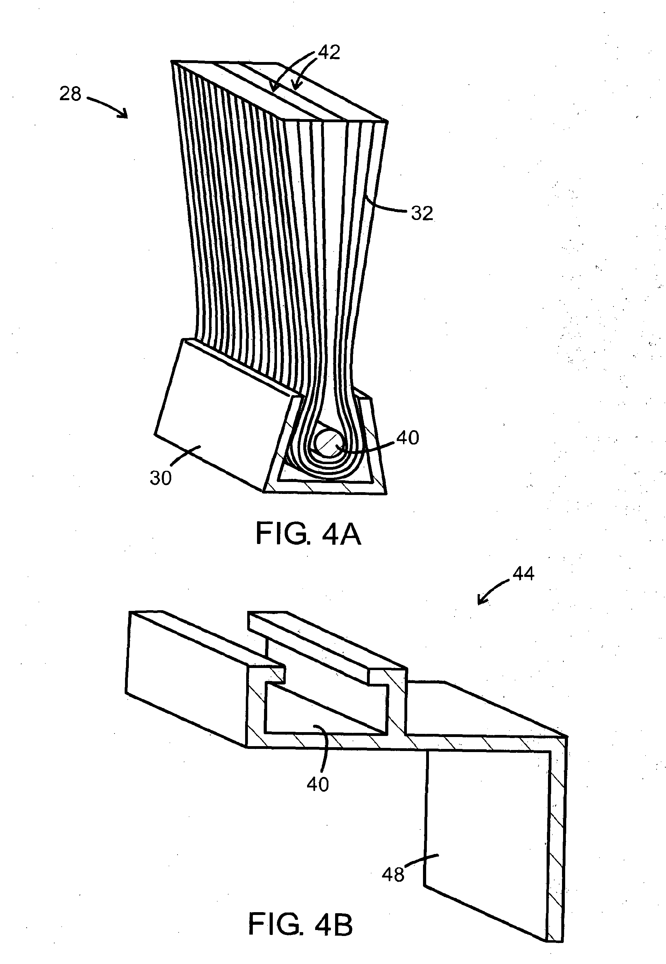

FIG. 4A illustrates schematically an embodiment of a brush with a fin. The configuration of the brush is not important for the invention, but the brush illustrated is merely an example of an ordinary configuration out of many well-known configurations which are usable. In this example, the bristles 32 of the brush are bent double and clamped in a body 30 by a rod 40 placed in the fold of the bristles 32 and pressed into the body 30. In this embodiment, the fin 42 is fastened in the body 30 in the same way as the bristles 32. The fin 42 need not necessarily extend to the ends of the bristles or the body but may be of any desired width, length and contour (not depicted).

FIG. 4B depicts schematically an embodiment of a fastening strip 44 for mounting the seal 28 on, for example, a radiator. The configuration of the strip is not important for the invention, the strip illustrated is merely one example of an ordinary embodiment out of many well-known embodiments which are usable. The gap 46 in the strip is adapted to retaining the body 30 of the brush, and the flange 48 to being fastened to a surface where it is desired to provide a seal. The strip 44 may be made of, for example, metal, plastic, rubber or any other suitable material desired. The brush may also be so arranged that it can be fastened to the chassis or the radiator without a fastening strip.

The description set out above is primarily intended for facilitate comprehension and no unnecessary limitations of the invention are to be inferred therefrom. The modifications which will be obvious to one skilled in the art from perusing the description may be implemented without departing from the scope of the claims set out below.

## Claims

1. A sealing arrangement comprising a vehicle chassis (10), a vehicle cab (14) and a seal adapted to sealing between the vehicle chassis (10) and the vehicle cab (14), ***characterised* in that** the seal takes the form of a brush (28) and **in that** bristles (32) of the brush (28) are cut to shape in such a way that their length varies along the extent of the brush.

2. A sealing arrangement according to claim 1, in which a body (30) of the seal (28) is adapted to being connected to a radiator (12) on the vehicle chassis (10).

3. A sealing arrangement according to claim 1 and 2, in which the bristles (32) of the brush (28) abut against the underside (18) of the cab.

4. A sealing arrangement according to claim 1, in which a body (30) of the seal (28) is adapted to being connected to the vehicle cab (14).

5. A sealing arrangement according to any one of the foregoing claims, in which the brush (28) has a greater width than the width of a gap between the vehicle chassis (10) and the vehicle cab (14).

6. A sealing arrangement according to any one of the foregoing claims, in which a brush (28) has a fin (42).

7. A sealing arrangement according to any one of the foregoing claims, in which the bristles (32) of the brush (28) are made of plastic such as polyethylene terephthalate, polybutene terephthalate or polyamide.

8. A sealing arrangement according to any one of the foregoing claims, in which the bristles of the brush have their one end fastened in a first body (30) and their other end fastened in a second body (31), the first body being adapted to being connected to the vehicle chassis (10) and the second body being adapted to being connected to the vehicle cab (14).

9. A sealing arrangement according to any one of claims 1-7, in which the bristles of the brush have their one end fastened in a first body (30) and their other end freely accommodated in a slit in a second body (31).

10. A sealing arrangement according to any one of the foregoing claims, in which the brush (28) is provided with bristles (33) which run at a different angle from other bristles (32) of the brush.

11. Use of a seal having the form of a brush (28), the bristles (32) of the brush (28) being cut to shape in such a way that their length varies along the extent of the brush (28), to seal between a vehicle chassis (10) and a vehicle cab (14).

## Patentansprüche

1. Dichtungsanordnung, die umfasst: ein Fahrzeugchassis (10), eine Fahrzeugkabine (14) und eine Dichtung, die dazu ausgebildet ist, zwischen dem Fahrzeugchassis (10) und der Fahrzeugkabine (14) abzudichten, **dadurch gekennzeichnet, dass** die Dichtung die Form einer Bürste (28) aufweist und dass Borsten (32) der Bürste (28) derart in Form geschnitten sind, dass deren Länge entlang der Erstreckung der Bürste variiert.

2. Dichtungsanordnung nach Anspruch 1, wobei ein Körper (30) der Dichtung (28) dazu ausgebildet ist, mit einem Kühler (12) an dem Fahrzeugchassis (10) verbunden zu sein.

3. Dichtungsanordnung nach Anspruch 1 und 2, wobei die Borsten (32) der Bürste (28) an der Unterseite (18) der Kabine anliegen.

4. Dichtungsanordnung nach Anspruch 1, wobei ein Körper (30) der Dichtung (28) dazu ausgebildet ist, mit der Fahrzeugkabine (14) verbunden zu sein.

5. Dichtungsanordnung nach einem der vorangehenden Ansprüche, wobei die Bürste (28) eine größere Breite aufweist als die Breite eines Abstands zwischen dem Fahrzeugchassis (10) und der Fahrzeugkabine (14).

6. Dichtungsanordnung nach einem der vorangehenden Ansprüche, wobei die Bürste (28) eine Lamelle (42) aufweist.

7. Dichtungsanordnung nach einem der vorangehenden Ansprüche, wobei die Borsten (32) der Bürste (28) aus Kunststoff, wie beispielsweise Polyethylenterephthalat, Polybutenterephthalat oder Polyamid, hergestellt sind.

8. Dichtungsanordnung nach einem der vorangehenden Ansprüche, wobei die Borsten der Bürste ein in einem ersten Körper (30) befestigtes Ende und ein anderes in einem zweiten Körper (31) befestigtes Ende aufweisen, wobei der erste Körper dazu ausgebildet ist, mit dem Fahrzeugchassis (10) verbunden zu sein, und der zweite Körper dazu ausgebildet ist, mit der Fahrzeugkabine (14) verbunden zu sein.

9. Dichtungsanordnung nach einem der Ansprüche 1 bis 7, wobei die Borsten der Bürste ein in einem ersten Körper (30) befestigtes Ende und ein anderes frei in einem Spalt in einem zweiten Körper (31) angeordnetes Ende aufweisen.

10. Dichtungsanordnung nach einem der vorangehenden Ansprüche, wobei die Bürste (28) Borsten (33) umfasst, die sich in einem von den anderen Borsten (32) der Bürste verschiedenen Winkel erstrecken.

11. Verwenden einer Dichtung, die die Form einer Bürste (28) aufweist, wobei die Borsten (32) der Bürste (28) derart in Form geschnitten sind, dass deren Länge entlang der Erstreckung der Bürste (28) variiert, um zwischen einem Fahrzeugchassis (10) und einer Fahrzeugkabine (14) abzudichten.

## Revendications

1. Dispositif d'étanchéité comprenant un châssis de véhicule (10), une cabine de véhicule (14) et un joint d'étanchéité adapté pour assurer une étanchéité entre le châssis du véhicule (10) et la cabine du véhicule (14), **caractérisé en ce que** le joint d'étanchéité se présente sous la forme d'une brosse (28) et **en ce que** les poils (32) de la brosse (28) sont découpés en forme de telle sorte que leur longueur varie sur l'étendue de la brosse.

2. Dispositif d'étanchéité selon la revendication 1, dans lequel un corps (30) du joint d'étanchéité (28) est adapté pour être connecté à un radiateur (12) sur le châssis du véhicule (10).

3. Dispositif d'étanchéité selon la revendication 1 et 2, dans lequel les poils (32) de la brosse (28) viennent en butée contre le dessous (18) de la cabine.

4. Dispositif d'étanchéité selon la revendication 1, dans lequel un corps (30) du joint d'étanchéité (28) est adapté pour être connecté à la cabine du véhicule (14).

5. Dispositif d'étanchéité selon l'une quelconque des revendications précédentes, dans lequel la brosse (28) a une largeur supérieure à la largeur d'un écartement entre le châssis de véhicule (10) et la cabine de véhicule (14).

6. Dispositif d'étanchéité selon l'une quelconque des revendications précédentes, dans lequel une brosse (28) a une ailette (42).

7. Dispositif d'étanchéité selon l'une quelconque des revendications précédentes, dans lequel les poils (32) de la brosse (28) sont constitués d'un plastique tel que du polytéréphtalate d'éthylène, du polytéréphtalate de butène ou du polyamide.

8. Dispositif d'étanchéité selon l'une quelconque des revendications précédentes, dans lequel les poils de la brosse ont l'une de leurs extrémités fixée dans un premier corps (30) et leur autre extrémité fixée dans un deuxième corps (31), le premier corps étant adapté pour être connecté au châssis de véhicule (10) et le deuxième corps étant adapté pour être connecté à la cabine de véhicule (14).

9. Dispositif d'étanchéité selon l'une quelconque des revendications 1 à 7, dans lequel les poils de la brosse ont l'une de leurs extrémités fixée dans un premier corps (30) et leur autre extrémité reçue librement dans une fente formée dans un deuxième corps (31).

10. Dispositif d'étanchéité selon l'une quelconque des revendications précédentes, dans lequel la brosse (28) est pourvue de poils (33) qui s'étendent selon un angle différent d'autres poils (32) de la brosse.

11. Utilisation d'un joint d'étanchéité ayant la forme d'une brosse (28), les poils (32) de la brosse (28) étant découpés en forme de telle sorte que leur longueur varie sur l'étendue de la brosse (28), pour assurer une étanchéité entre un châssis de véhicule (10) et une cabine de véhicule (14).
